# EUROPEAN PATENT SPECIFICATION

(11) **EP 4 329 137 B1**
(45) Date of publication and mention of the grant of the patent: **25.03.2026**
(21) Application number: 22903469.9
(22) Date of filing: 06.12.2022
(51) Int. Cl.: H02J 7/00

(54) **BATTERY MANAGEMENT CIRCUIT AND BATTERY APPARATUS**
BATTERIEVERWALTUNGSSCHALTUNG UND BATTERIEVORRICHTUNG
CIRCUIT DE GESTION DE BATTERIE ET APPAREIL DE BATTERIE

(30) Priority: 06.12.2021 CN 202111480150
(43) Date of publication of application: 28.02.2024
(73) Proprietor: Zhuhai Cosmx Power Supply Co., Ltd., Guangdong 519100 (CN)
(72) Inventor: ZHANG, Zhiguo, Zhuhai, Guangdong 519100 (CN)
(74) Representative: PPR AG
(86) International application number: PCT/CN2022/137004
(87) International publication number: WO 2023/104047

(56) References cited:
- CN-A- 107 204 638
- CN-A- 107 994 640
- CN-A- 112 467 815
- CN-A- 112 510 652
- CN-A- 114 142 567
- CN-B- 106 329 594
- CN-U- 204 068 376
- JP-A- 2010 051 082
- US-A1- 2020 350 777

## Description

### TECHNICAL FIELD

The present invention relates to the field of battery technologies and, in particular, to a battery management circuit and a battery apparatus.

### BACKGROUND

With the development of battery technologies, there are more and more battery-powered application scenarios, for example, for use in vehicles and electric vehicles. However, there are some problems in the application process. For example, in practical applications, the charging capacity of lithium-ion batteries will be greatly reduced in certain specific environments, such as low-temperature environments.

In this regard, a battery management method is needed to take account of various scenarios in practical applications.

CN 107994640A discloses a passive triggered charging current limiting battery management system with a battery management system main board; the battery management system main board includes a conventional over-charge protection circuit, an over-discharge protection circuit, and a short-circuit protection circuit , temperature protection circuit, data recording and transmission communication circuit, alarm circuit and internal equalization circuit; also has an active charging current limiting circuit.

US 2020/350777A1 discloses a controller, for managing a battery pack, said controller comprising: a detection terminal, coupled to a detection circuit, operable for transmitting an enable signal when values of battery parameters for said battery pack satisfy a sleep condition.

CN 106329594B discloses a battery charging current limiting device of an energy storage system including a control unit, a charging current limiting circuit, a monitoring unit and a data processing unit.

CN 204068376U discloses an easily extensible communication back-up source lithium battery management system, characterized in that: this system comprises at least two point administration modules, and point administration module is parallel with one another to be connected with charger, load respectively afterwards, divides between administration module and passes through serial communication.

### SUMMARY

The present invention is as defined in the appended claim set. The present invention provides a battery management circuit according to claim 1 and a battery apparatus according to claim 13, for implementing battery management in different scenarios.

In a first aspect, the present invention provides a battery management circuit, including: an acquisition circuit, a processing circuit, a first switching element, a second switching element, and an amplitude limiting circuit; where the acquisition circuit is connected in parallel with a battery; a positive electrode of the battery is connected to a charging port, a negative electrode of the battery is connected to a first end of the first switching element and a battery pack internal ground, and a second end of the first switching element is connected to a first end of the second switching element, a second end of the second switching element is connected to ground; a first end of the amplitude limiting circuit is connected to the first end of the first switching element, and a second end of the amplitude limiting circuit is connected to the second end of the first switching element; the processing circuit is connected to the acquisition circuit, a control end of the first switching element, and a control end of the second switching element; the processing circuit is configured to switch to a normal charging mode or a current limiting charging mode by controlling states of the first switching element and the second switching element according to a battery working environment detected by the acquisition circuit.

The amplitude limiting circuit includes: a third switching element, a first diode, an inductance element, and a first sampling impedance element; where a first end of the first sampling impedance element is connected to the processing circuit and a first end of the inductance element, and a second end of the first sampling impedance element is connected to the first end of the first switching element; a second end of the inductance element is connected to a positive electrode of the first diode and a first end of the third switching element; a negative electrode of the first diode is connected to the positive electrode of the battery; a control end of the third the switching element is connected to the processing circuit, and a second end of the third switching element is connected to the second end of the first switching element.

Optionally, the amplitude limiting circuit further includes: a first capacitor and a second capacitor; a first end of the first capacitor is connected to the positive electrode of the battery, and a second end of the first capacitor is connected to the first end of the inductance element; a first end of the second capacitor is connected to the positive electrode of the battery, and a second end of the second capacitor is connected to the second end of the third switching element.

Optionally, the amplitude limiting circuit further includes: a first operational amplifier unit arranged between the first sampling impedance element and the processing circuit, and a second operational amplifier unit between the processing circuit and the third switching element; an input end of the first operational amplifier unit is connected to the first end of the first sampling impedance element, and an output end of the first operational amplifier unit is connected to the processing circuit; an input end of the second operational amplifier unit is connected to the processing circuit, and an output end of the second operational amplifier unit is connected to a control end of the third switching element.

Optionally, the battery management circuit further includes: a low power consumption maintaining module and a first linear voltage regulator; where an input end of the first linear voltage regulator is connected to a positive electrode of the battery, and an output end of the first linear voltage regulator is connected to the low power consumption maintaining module; the low power consumption maintaining module is arranged between the processing circuit and control ends of the first switching element and the second switching element; an input end of the low power consumption maintaining module is connected to the processing circuit, an output end of the low power consumption maintaining module is respectively connected to the control end of the first switching element and the control end of the second switching element.

Optionally, the battery management circuit further includes: a second sampling impedance element arranged between the negative electrode of the battery and the first switching element; a first end of the second sampling impedance element is connected to the negative electrode of the battery and the low power consumption maintaining module, and a second end of the second sampling impedance element is connected to the first end of the first switching element, the battery pack internal ground and the low power consumption maintaining module.

Optionally, the first end and the second end of the second sampling impedance element are also connected to the acquisition circuit.

Optionally, the low power consumption maintaining module includes: a first trigger, a second trigger, and a first operational amplifier unit; an input end of the first trigger is connected to the processing circuit, an output end of the first trigger is connected to the control end of the first switching element; an input end of the second trigger is connected to the processing circuit, an output end of the second trigger is connected to the control end of the second switching element; an input end of the first operational amplifier unit is respectively connected to the first end and the second end of the second sampling impedance element, and an output end of the first operational amplifier unit is connected to the second trigger.

Optionally, the positive electrode of the battery is connected to a bus module, and a ground end of the bus module is connected to the ground.

Optionally, the battery management circuit further includes: a first impedance element, an optocoupler module, and a second linear voltage regulator; an input end of the optocoupler module is connected to the bus module, and an output end of the optocoupler module is connected to an enabling end of the second linear voltage regulator and a first end of the first impedance element; a second end of the first impedance element is connected to the battery pack internal ground; an input end of the second linear voltage regulator is connected to the positive electrode of the battery, and an output end of the second linear voltage regulator is connected to the processing circuit.

Optionally, the optocoupler module includes: a light emitting diode and a photosensitive transistor; a positive electrode of the light emitting diode is connected to the bus module, and a negative electrode of the light emitting diode is connected to the ground; the photosensitive transistor is arranged corresponding to the light emitting diode, a first end of the photosensitive transistor is connected to the input end of the second linear voltage regulator, and a second end of the photosensitive transistor is connected to the enabling end of the second linear voltage regulator.

Optionally, the battery management circuit further includes: an isolation circuit; the isolation circuit is arranged between the bus module and the processing circuit, and is respectively connected to the bus module and the processing circuit.

Optionally, the battery management circuit further includes: a third linear voltage regulator; an input end of the third linear voltage regulator is connected to the positive electrode of the battery, an enabling end of the third linear voltage regulator is connected to the bus module, and an output end of the third linear voltage regulator is connected to the bus module and the isolation circuit.

In a second aspect, the present invention also provides a battery apparatus, including: a battery and the battery management circuit as described in the first aspect; where the battery management circuit includes: an acquisition circuit, a processing circuit, a first switching element, a second switching element, and an amplitude limiting circuit; the acquisition circuit is connected to the battery; a positive electrode of the battery is connected to a charging port, a negative electrode of the battery is connected to a first end of the first switching element and the battery pack internal ground, and a second end of the first switching element is connected to a first end of the second switching element, a second end of the second switching element is connected to the ground; a first end of the amplitude limiting circuit is connected to the first end of the first switching element, and a second end of the amplitude limiting circuit is connected to the second end of the first switching element; the processing circuit is connected to the acquisition circuit, a control end of the first switching element and a control end of the second switching element; the processing circuit is configured to switch to a normal charging mode or a current limiting charging mode by controlling states of the first switching element and the second switching element according to a battery working environment detected by the acquisition circuit.

The present invention provides a battery management circuit and a battery apparatus, the battery management circuit includes: an acquisition circuit, a processing circuit, a first switching element, a second switching element, and an amplitude limiting circuit; the acquisition circuit is connected to a battery; a second end of the first switching element is connected to a first end of the second switching element, a second end of the second switching element is connected to a ground; a first end of the amplitude limiting circuit is connected to a first end of the first switching element, and a second end of the amplitude limiting circuit is connected to the second end of the first switching element; the processing circuit is connected to the acquisition circuit, a control end of the first switching element, and a control end of the second switching element; the processing circuit is configured to switch to a normal charging mode or a current limiting charging mode by controlling states of the first switching element and the second switching element according to a battery working environment detected by the acquisition circuit. By means of acquiring a circuit parameter through the acquisition circuit, switching to a charging mode through the processing circuit, and completing current limiting through the amplitude limiting circuit, normal automatic charging or current limiting charging of the battery under different operating conditions can be achieved.

### BRIEF DESCRIPTION OF DRAWINGS

The accompanying drawings, which are incorporated in and constitute a part of this specification, illustrate embodiments consistent with the claimed subject-matter (except embodiment 1) and together with the description serve to explain the principles of the invention
FIG. 1 is a schematic diagram of an application scenario provided by an example of the present invention.
FIG. 2 is a schematic structural diagram of a battery management circuit provided in Embodiment 1 which is not covered by the claimed subject-matter but is kept in this description for illustrative purposes.
FIG. 3 is a schematic structural diagram of a battery management circuit provided in Embodiment 2.
FIG. 4 is a schematic structural diagram of another battery management circuit provided in Embodiment 2.
FIG. 5 is a schematic structural diagram of a battery management circuit provided in Embodiment 3.
FIG. 6 is a schematic structural diagram of another battery management circuit provided in Embodiment 3.
FIG. 7 is a schematic structural diagram of another battery management circuit provided in Embodiment 3.
FIG. 8 is a schematic structural diagram of another battery management circuit provided in Embodiment 3.
FIG. 9 is a schematic structural diagram of a battery management circuit provided in Embodiment 4.
FIG. 10 is a schematic structural diagram of another battery management circuit provided in Embodiment 4.
FIG. 11 is a schematic structural diagram of another battery management circuit provided in Embodiment 4.
FIG. 12 is a schematic structural diagram of another battery management circuit provided in Embodiment 4.
FIG. 13 is a schematic structural diagram of another battery management circuit provided in Embodiment 4.
FIG. 14 is a schematic diagram of a battery apparatus provided in Embodiment 5.

With the above drawings, specific embodiments have been shown, which will be described in more detail hereinafter. These drawings and text descriptions are not intended to limit the scope of the concept of the invention in any way, but to illustrate the concept for those skilled in the art by referring to specific embodiments.

### DESCRIPTION OF EMBODIMENTS

The exemplary embodiments will be described in detail herein, which are illustrated in the accompanying drawings. When the following description refers to the accompanying drawings, the same reference numbers in different drawings refer to the same or similar elements unless otherwise indicated. The implementations described in the following exemplary embodiments do not represent all implementations consistent with the present invention. Rather, they are merely examples of apparatuses and methods consistent with the present invention as recited in the appended claims.

With the development of battery technologies, there are more and more battery-powered application scenarios, for example, for use in vehicles and electric vehicles. However, there are some problems in the application process. For example, in practical applications, the charging capacity of lithium-ion batteries will be greatly reduced in certain specific environments, such as a low-temperature environment. In this regard, a battery management method is needed to take account of various scenarios in practical applications.

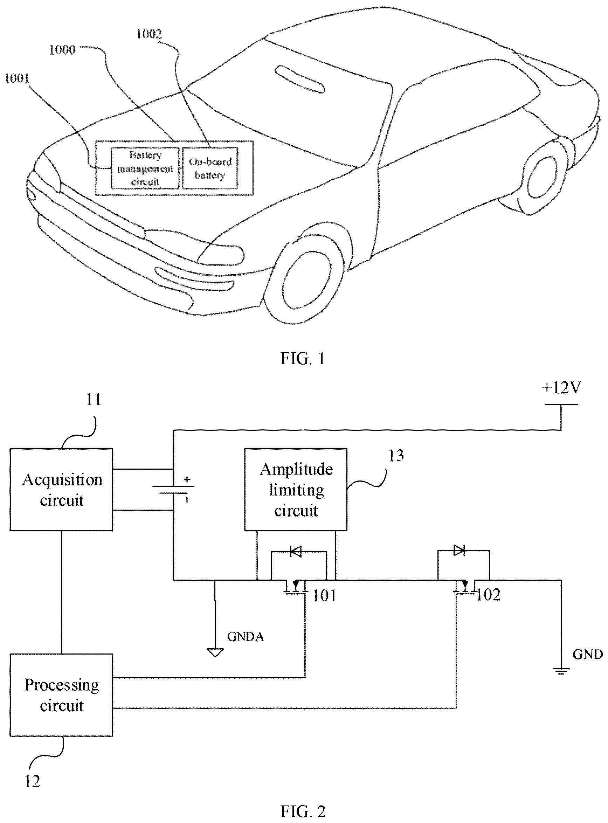

FIG. 1 is a schematic diagram of an application scenario provided by an example of the present invention, which provides an application scenario of power supply of an on-board battery. As shown in FIG. 1, 1000 is an on-board battery pack, including a battery management circuit 1001 and an on-board battery 1002. The battery management circuit and the on-board battery are usually integrated in one on-board battery pack. The on-board battery usually refers to a 12V starting battery, and lithium-ion batteries have gradually replaced traditional 12V lead-acid starting batteries. The battery management circuit is used to implement basic battery management functions, such as overvoltage and undervoltage protection, conventional charging and discharging, and other functions.

In a specific environment, such as a low temperature environment below - 10 °C, the charging capacity of lithium-ion batteries will drop sharply. If a charging current at a normal temperature is used for charging, it will lead to the aging of lithium precipitation of lithium-ion batteries, and even cause an internal short-circuit in the battery cores which leads to outbreak of fire and other safety issues. However, in practical applications, constant voltage charging is mostly used, which cannot accurately control an output current, while constant current charging is difficult to meet both a load requirement and a current accuracy control requirement. In addition, in practical applications, the battery management circuit will be in a standby state for a long time, but it will still consume the power inside the battery at this time. The battery management circuit is a necessary auxiliary circuit for the normal operation of the battery, but its static power consumption will directly affect a service life of the battery.

Through the design of the battery management circuit, it is a feasible means to realize a limitation of the charging current under specific working conditions, and it is also possible to consider turning off unnecessary components during the standby to reduce power consumption.

The technical solutions of the present invention will be described in detail below with specific embodiments. The following specific embodiments may be combined with each other, and the same or similar concepts or processes may not be repeated in some embodiments. In the description of the present application, unless otherwise clearly specified and limited, each term should be interpreted in a broad sense within the field. Embodiments of the present application will be described below with reference to the accompanying drawings.

### Embodiment 1

FIG. 2 is a schematic structural diagram of a battery management circuit provided in Embodiment 1, not covered by the scope of the claims, but kept in this description since it helps in understanding the invention. As shown in FIG. 2, the battery management circuit includes: an acquisition circuit 11, a processing circuit 12, a first switching element 101, a second switching element 102 and an amplitude limiting circuit 13;
where the acquisition circuit 11 is connected to a battery; a positive electrode of the battery is connected to a +12V charging port, a negative electrode of the battery is connected to a first end of the first switching element 101 and a battery pack internal ground GNDA, and a second end of the first switching element 101 is connected to a first end of the second switching element 102, a second end of the second switching element 102 is connected to the ground GND; a first end of the amplitude limiting circuit 13 is connected to the first end of the first switching element 101, and a second end of the amplitude limiting circuit 13 is connected to the second end of the first switching element 101; the processing circuit 12 is connected to the acquisition circuit 11, a control end of the first switching element 101 and a control end of the second switching element 102;
the processing circuit 12 is configured to switch to a normal charging mode or a current limiting charging mode by controlling states of the first switching element 101 and the second switching element 102 according to a battery working environment detected by the acquisition circuit 11.

The present embodiment is illustrated in combination with a specific application scenario: the switching element can be a MOSFET transistor, the acquisition circuit 11 is connected to the battery; the positive electrode of the battery is connected to the +12V charging port, and the negative electrode of the battery is connected to the first end of the first switching element 101 and the battery pack internal ground GNDA, the first switching element 101 is connected in series with the second switching element 102, the second end of the second switching element 102 is connected to the ground GND; the amplitude limiting circuit 13 is connected in parallel with the first switching element 101; the processing circuit 12 is connected to the acquisition circuit 11, the control end of the first switching element 101 and the control end of the second switching element 102;
the acquisition circuit 11 is configured to monitor various parameters of the battery in real time, such as current, voltage, temperature, etc., and the data will be transmitted to the processing circuit 12. When it is detected that some changes of the parameters will lead to a battery state severely deviating from a normal working condition, the processing circuit 12 switches to the current limiting charging mode by controlling the states of the first switching element 101 and the second switching element 102 according to the battery working environment; when it is detected that the parameters are back to the normal working environment, the processing circuit 12 switches to the normal charging mode by controlling the states of the first switching element 101 and the second switching element 102. In the normal charging mode, the corresponding charging circuit is: + 12V -battery -first switching element 101-second switching element 102-GND; in the current limiting charging mode, the corresponding charging circuit is: +12V-battery-amplitude limiting circuit 13-second switching element 102-GND. The processing circuit 12 can also adjust an operating parameter of the amplitude limiting circuit 13 to realize an adjustment of the charging current on the charging circuit, thereby achieving the current limiting charging. In the current limiting charging mode, the amplitude limiting circuit 13 operates, the first switching element 101 is turned off, and the second switching element 102 is turned on; in the normal charging mode, the first switching element 101 is turned on, the second switching element 102 is turned on, and the amplitude limiting circuit 13 does not operate.

The present embodiment provides a battery management circuit, including: an acquisition circuit, a processing circuit, a first switching element, a second switching element, and an amplitude limiting circuit; the acquisition circuit is connected to a battery, a second end of the first switching element is connected to a first end of the second switching element, and a second end of the second switching element is connected to the ground; a first end of the amplitude limiting circuit is connected to a first end of the first switching element, and a second end of the amplitude limiting circuit is connected to the second end of the first switching element; and the processing circuit is connected to the acquisition circuit, a control end of the first switching element and a control end of the second switching element; the processing circuit is configured to switch to a normal charging mode or a current limiting charging mode by controlling states of the first switching element and the second switching element according to a battery working environment detected by the acquisition circuit. By means of acquiring a circuit parameter through the acquisition circuit, switching to a charging mode through the processing circuit, and completing current limiting through the amplitude limiting circuit, the normal automatic charging or the current limiting charging of the battery can be automatically realized under different working conditions.

### Embodiment 2

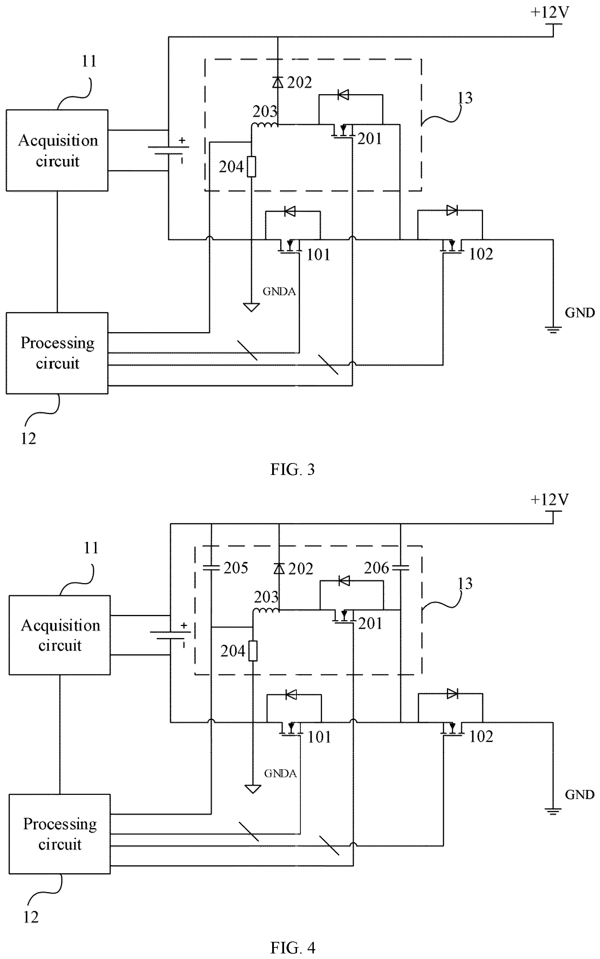

FIG. 3 is a schematic structural diagram of a battery management circuit provided in Embodiment 2 of the present invention. As shown in FIG. 3, on the basis of any embodiment, the amplitude limiting circuit 13 includes: a third switching element 201, a first diode 202, an inductance element 203 and a first sampling impedance element 204;
where a first end of the first sampling impedance element 204 is connected to the processing circuit 12 and a first end of the inductance element 203, and a second end of the first sampling impedance element 204 is connected to the first end of the first switching element 101;
a second end of the inductance element 203 is connected to a positive electrode of the first diode 202 and a first end of the third switching element 201; a negative electrode of the first diode 202 is connected to the positive electrode of the battery; a control end of the third switching element 201 is connected to the processing circuit 12, and a second end of the third switching element 201 is connected to the second end of the first switching element 101.

The present embodiment is illustrated in combination with a specific application scenario: the amplitude limiting circuit is composed of the third switching element 201, the first diode 202, the inductance element 203, and the first sampling impedance element 204, where the first sampling impedance element 204 generally adopts a power resistor with a small resistance value as a current sampling resistor in the amplitude limiting circuit 13, and a current value will be sent to the processing circuit 12, which is directly related to control of the amplitude limiting process. One end of the first sampling impedance element 204 is connected to the first end of the first switching element 101, and the other end is connected in series with the inductance element 203 and the first diode 202 to the positive electrode of the battery. The positive electrode of the first diode 202 is also connected to one end of the third switching element 201, while the other end is connected to the second end of the first switching element 101.

Since an inductance current cannot change abruptly, as an energy storage element, the inductance element 203 undertakes a main function of current limiting. The current limiting charging function is realized by continuously turning on and off the third switching element 201, and limiting a turning-on time of the third switching element 201 thereby limits an average current of the circuit. When the third switching element 201 is turned on, the battery is charged through the amplitude limiting circuit, and the inductor stores energy during the process. When the third switching element 201 is turned off, the current flows from the sampling resistor through the inductance element to the fly-wheel diode and then to the battery. At this time, the inductor stores energy and discharges to undertake the task of charging the battery.

FIG. 4 is a schematic structural diagram of another battery management circuit provided in Embodiment 2, which is used to illustrate an implementation manner of an amplitude limiting circuit. As shown in FIG. 4, the amplitude limiting circuit 13 also includes: a first capacitor 205 and a second capacitor 206;
a first end of the first capacitor 205 is connected to the positive electrode of the battery, and a second end of the first capacitor 205 is connected to the first end of the inductance element 203;
a first end of the second capacitor 206 is connected to the positive electrode of the battery, and a second end of the second capacitor 206 is connected to the second end of the third switching element 201.

Specifically, the first capacitor is connected in parallel between the negative electrode of the first diode 202 and the first end of the inductance element 203. During the process of the inductance element 203 discharging through the first diode 202, the interference is relatively large, thereby resulting in an obvious voltage fluctuation and a big noise, which thus leads to a significant impact on the load. Generally speaking, a voltage waveform at this time is a triangular wave, so a capacitor element is needed to smooth the triangular wave into a stable DC current. Similarly, the second capacitor is connected in parallel between the negative electrode of the first diode 202 and the second end of the third switching element 201, which also plays a similar role.

In the present embodiment, through the setting of a capacitor in parallel connection, the voltage during the discharge process is smoothed, the impact of a sudden voltage change on a component is reduced, and the noise is effectively weakened at the same time.

In one example, the amplitude limiting circuit 13 further includes: a first operational amplifier unit disposed between the first sampling impedance element 204 and the processing circuit 12, and a second operational amplifier unit 208 disposed between the processing circuit 12 and the third switching element 201;
an input end of the first operational amplifier unit is connected to the first end of the first sampling impedance element 204, and an output end of the first operational amplifier unit is connected to the processing circuit 12;
an input end of the second operational amplifier unit 208 is connected to the processing circuit 12, and an output end of the second operational amplifier unit 208 is connected to a control end of the third switching element 201.

The operational amplifier is used for amplitude conversion of a sampling current or a control signal, so that an input accepted by the processing circuit 12 is within an acceptable range, and it is ensured that the control signal output by the processing circuit 12 can effectively control a target element.

The present embodiment provides a specific structure of an amplitude limiting circuit, including: a third switching element, a first diode, an inductance element, and a first sampling impedance element; a first end of the first sampling impedance element is connected to the processing circuit and the first end of inductance element, a second end of the first sampling impedance element is connected to a first end of the first switching element; a second end of the inductance element is connected to a positive electrode of the first diode and a first end of the third switching element; a negative electrode of the first diode is connected to the positive electrode of the battery; a control end of the third switching element is connected to the processing circuit, and a second end of the third switching element is connected to the second end of the first switching element. Through the design of the inductance element, energy storage and energy discharge are completed, and by controlling a turning-off time of the switching element, and then controlling the energy discharge time of the inductance element, a control of the average current in a specific period of time is realized.

### Embodiment 3

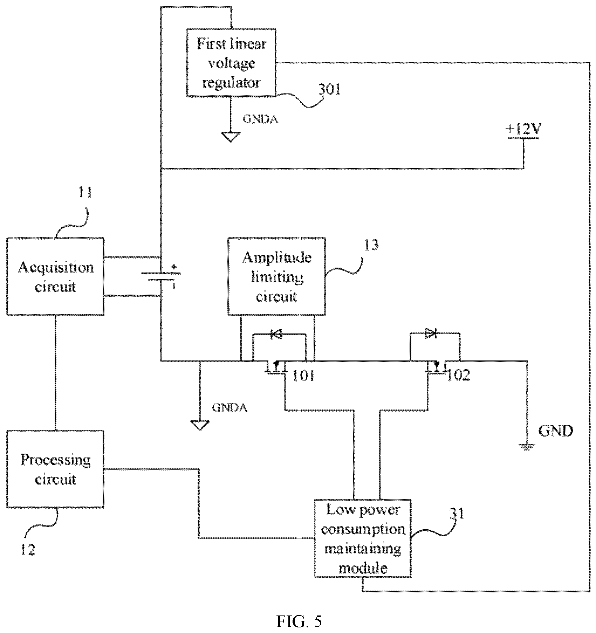

FIG. 5 is a schematic structural diagram of a battery management circuit provided in Embodiment 3 of the present invention. As shown in FIG. 5, on the basis of any embodiment, the battery management circuit further includes: a low power consumption maintaining module 31 and a first linear voltage regulator 301;
where an input end of the first linear voltage regulator 301 is connected to the positive electrode of the battery, and an output end of the first linear voltage regulator 301 is connected to the low power consumption maintaining module 31;
the low power consumption maintaining module 31 is arranged between the processing circuit 12 and the control ends of the first switching element 101 and the second switching element 102; an input end of the low power consumption maintaining module 31 is connected to the processing circuit 12, and an output end of the low power consumption maintaining module 31 is respectively connected to the control end of the first switching element 101 and the control end of the second switching element 102.

The present embodiment is exemplified in combination with a specific application scenario: the low power consumption maintaining module 31 and the first linear voltage regulator 301 are mainly designed for both maintaining an operation of a necessary functional device in the management circuit when the battery is in a dormancy mode and implementing a low power consumption maintaining circuit in a standby state when other devices are shut down. The first linear voltage regulator 301 is a power source with low-power consumption, which is continuously in a running state, and provides 5V power supply for the necessary devices to run in the standby state. The input end of the low power consumption maintaining module 31 is connected to the processing circuit 12, and the output end of the low power consumption maintaining module 31 is respectively connected to the control end of the first switching element 101 and the control end of the second switching element 102, so as to output a control signal to switching elements as desired, rendering state switching.

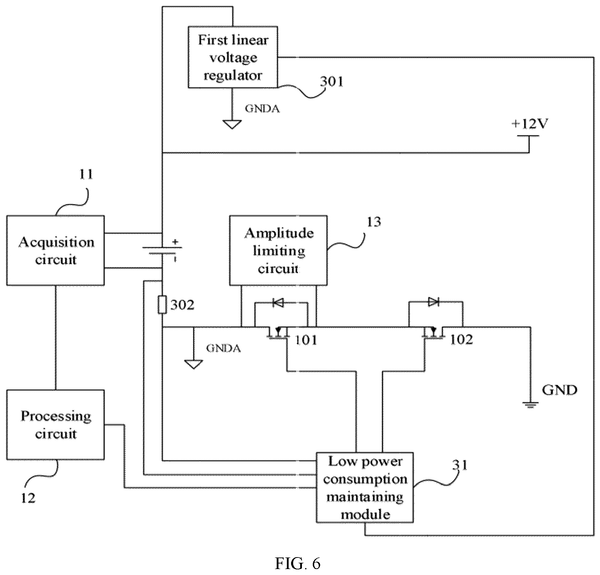

As an example, FIG. 6 is a schematic structural diagram of another battery management circuit provided in Embodiment 3. As shown in FIG. 6, the battery management circuit further includes: a second sampling impedance element 302 arranged between the negative electrode of the battery and the first switching element 101;
a first end of the second sampling impedance element 302 is connected to the negative electrode of the battery and the low power consumption maintaining module 31, and a second end of the second sampling impedance element 302 is connected to the first end of the first switching element 101, the battery pack internal ground and the low power consumption maintaining module 31.

The second sampling impedance element 302 is connected to the low power consumption maintaining module 31 for detecting a voltage on the sampling resistor, and then monitoring a discharge current. The low power consumption maintaining module turns off the second switching element 102 according to a preset threshold when the discharge current is so high that a risk may arise, so as to realize a short-circuit protection function in the dormancy state.

As an example, the second sampling impedance element 302 can also be connected to the processing circuit 12 through an operational amplifier. After a voltage is amplified, a discharge current is calculated through analog-to-digital conversion, and then a state signal and a clock signal sent by the processing circuit 12 are used to control the first switching element 101 and the second switching element 102. Controlling the first switching element 101 can realize controlling a duty ratio of the third switching element 201 in the amplitude limiting circuit 13 and thus controlling an average charging current of the battery, and controlling the second switching element 102 enables the second switching element 102 to be turned off in time when a risk may occur in the circuit, so as to realize the short-circuit protection function in the dormancy state.

The setting of the sampling impedance element ensures a basic protection function of the circuit in a low power consumption state.

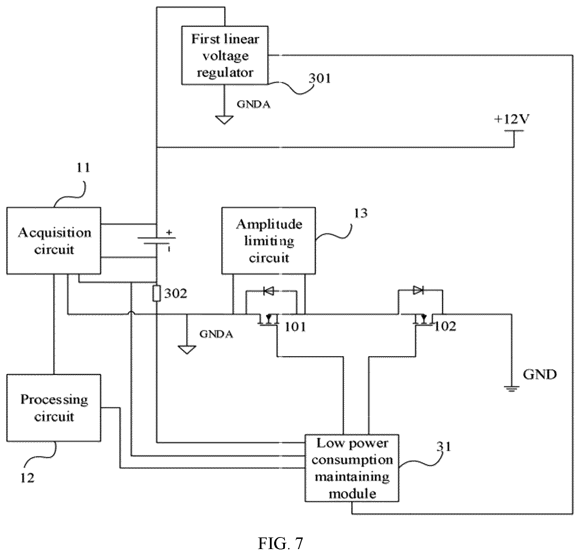

Exemplarily, FIG. 7 is a schematic structural diagram of another battery management circuit provided in Embodiment 3. As shown in FIG. 7, the first end and the second end of the second sampling impedance element 302 are also connected to the acquisition circuit 11.

Both ends of the second sampling impedance element are connected to the acquisition circuit 11 for acquiring an average value of an operating current. This value can be used to monitor the working state of the circuit to enable a normal state monitoring function. At the same time, this value can also be used to adjust the working states of the first switching element 101, the second switching element 102 and other devices. For example, when the operating current is too high, the corresponding device can be shut down to enable the protection function. In the present embodiment, the average value of the operating current of the second sampling impedance element can be acquired, and a basis for enabling adjustment, monitoring and protection functions can be provided.

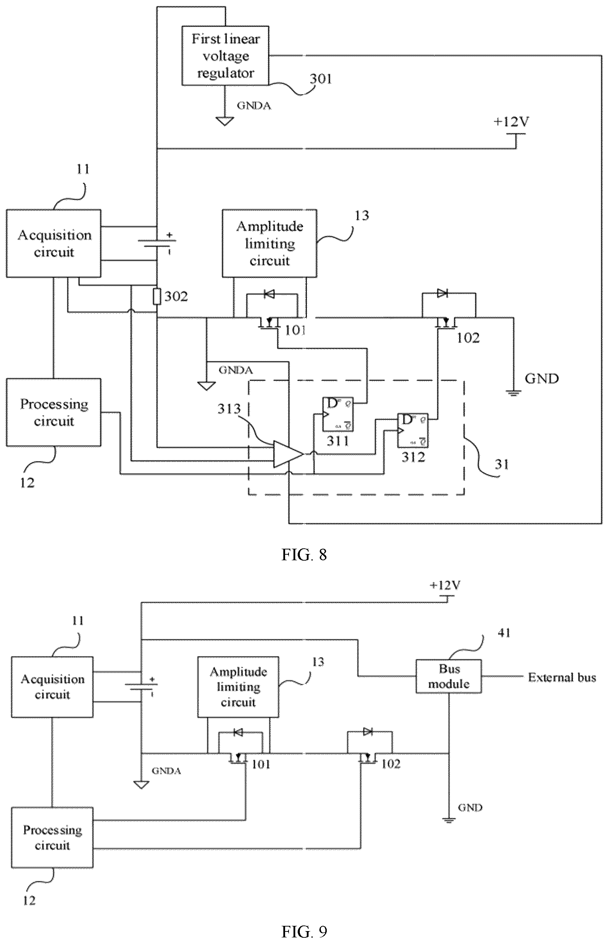

Exemplarily, FIG. 8 is a schematic structural diagram of another battery management circuit provided in Embodiment 3. which is used to illustrate a specific composition of the low power consumption maintaining module. As shown in FIG. 8, the low power consumption maintaining module 31 includes: a first trigger 311, a second trigger 312 and a first operational amplifier unit 313;
an input end of the first trigger 311 is connected to the processing circuit 12, an output end of the first trigger 311 is connected to the control end of the first switching element 101; an input end of the second trigger 312 is connected to the processing circuit 12, and an output end of the second trigger 312 is connected to the control end of the second switching element 102;
an input end of the first operational amplifier unit 313 is respectively connected to the first end and the second end of the second sampling impedance element 302, and an output end of the first operational amplifier unit 313 is connected to the second trigger 312.

Specifically, the low power consumption maintaining module 31 may be composed of the first trigger 311, the second trigger 312 and the first operational amplifier unit 313, a connection relationship among which is shown in the figure. Both the first trigger 311 and the second trigger 312 are D triggers. During the process of power-down or dormancy of the processing circuit 12, the first linear voltage regulator 301 always provides a 5V power supply for the low power consumption maintaining module 31, and the D trigger maintains a logic signal before dormancy, and controls a state of the switching element. The first operational amplifier unit 313 can be an operational amplifier that meets the requirements of the circuit parameters, and is used to monitor the discharge current for the battery and amplify the current signal. When a current exceeds a certain amplitude, the second switching element 102 is turned off by the second trigger 312 to enable the short-circuit protection function in the dormancy state. The first trigger 311 is used to control the state of the first switching element 101, so as to realize switching between the normal charging and the current limiting charging.

The present embodiment provides a battery management circuit, including a low power consumption maintaining module and a first linear voltage regulator; the input end of the first linear voltage regulator is connected to the positive electrode of the battery, and the output end of the first linear voltage regulator is connected to the low power consumption maintaining module; the low power consumption maintaining module is arranged between the processing circuit and the control ends of the first switching element and the second switching element; the input end of the low power consumption maintaining module is connected to the processing circuit, and the output end of the low power consumption maintaining module is respectively connected to the control ends of the first switching element and the second switching element. The first linear voltage regulator supplies power to the necessary components of the circuit during the dormancy process, thereby reducing the power consumption of the circuit during the dormancy process, and the low power consumption maintaining module receives various circuit parameters and control signals, thereby enabling monitoring, detection, protection, starting and other necessary functions during the dormancy process.

### Embodiment 4

FIG. 9 is a schematic structural diagram of a battery management circuit provided in Embodiment 4 of the present invention. As shown in FIG. 9, on the basis of any embodiment, the positive electrode of the battery is connected to a bus module 41, and a ground end of the bus module 41 is connected to the ground.

The present embodiment is exemplified in combination with a specific application scenario: the bus module 41 can be used to realize communication with an external bus, and at the same time, when a valid signal is received, the corresponding device can be activated to realize state switching for the circuit.

An anti-reverse diode can also be arranged between the bus module 41 and a +12V bus bar, where a positive electrode of the diode is connected to the bus bar, and a negative electrode thereof is connected to the bus module 41.

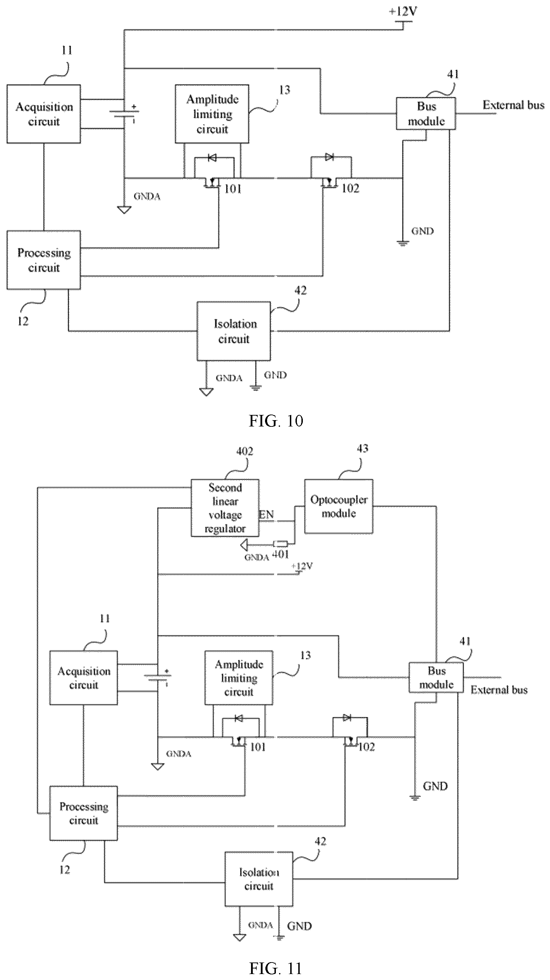

Exemplarily, FIG. 10 is a schematic structural diagram of another battery management circuit provided in Embodiment 4. As shown in FIG. 10, the battery management circuit further includes an isolation circuit 42.

The isolation circuit 42 is arranged between the bus module 41 and the processing circuit 12, and is respectively connected to the bus module 41 and the processing circuit 12.

The isolation circuit 42 is used to realize an electrical isolation between the bus module 41 and the processing circuit 12. When in power-down, different circuits connected to the internal ground and the external ground of the battery pack are isolated, but information can be exchanged among different circuits. For example, when a battery is in a state of charging or discharging protection, a switching element on a negative bus will cut off the circuit. At this time, due to the existence of the isolation circuit 42, an internal and external communications can still be carried out normally. Moreover, the isolation circuit 42 can also be arranged between the acquisition circuit 11 and the processing circuit 12.

The design of the isolation circuit reduces a mutual interference between the internal and external circuits in the dormancy state, and at the same time ensures the information exchange between the internal and external circuits.

Exemplarily, FIG. 11 is a schematic structural diagram of another battery management circuit provided in Embodiment 4. As shown in FIG. 11, the battery management circuit further includes: a first impedance element 401, an optocoupler module 43 and a second linear voltage regulator 402;
an input end of the optocoupler module 43 is connected to the bus module 41, and an output end of the optocoupler module 43 is connected to an enabling end of the second linear voltage regulator 402 and a first end of the first impedance element 401; a second end of the first impedance element 401 is connected to the battery pack internal ground;
an input end of the second linear voltage regulator 402 is connected to the positive electrode of the battery, and an output end of the second linear voltage regulator 402 is connected to the processing circuit 12.

When the first impedance element 401, the optocoupler module 43 and the second linear voltage regulator 402 are in the dormancy mode, the low power consumption maintaining circuit wakes up a structure of the processing circuit 12. Specifically, the input end of the optocoupler module 43 is connected to the bus module 41, and the output end of the optocoupler module 43 is connected to the enabling end of the second linear voltage regulator 402 and the first end of the first impedance element 401; the second end of the first impedance element 401 is connected to the battery pack internal ground; the input end of the second linear voltage regulator 402 is connected to the positive electrode of the battery, the output end of the second linear voltage regulator 402 is connected to the processing circuit 12, and the optocoupler module herein also plays a role of electrical isolation. Moreover, the optocoupler module 43 can send an enabling signal to the second linear voltage regulator 402 according to the bus module 41, and the first impedance element 401 acts as a pull-down resistor, so that an enabling pin is at a stable low voltage level when in the dormancy and at a high voltage level when in the conduction. Between the optocoupler and the bus module 41, and between the optocoupler and the second linear voltage regulator 402, a current limiting resistor can also be set respectively to ensure the safety of circuit components.

For example, during the dormancy state, the bus module 41 is in a standby state. If the bus module 41 detects that an external CAN bus has a data signal, the bus module 41 will output an activation signal to turn on the second linear voltage regulator 402, and after the second linear voltage regulator 402 is turned on, the processing circuit 12 will be powered on and running. After the processing circuit 12 is running, it will take over the activation signal from the bus module 41. When there is no CAN data on the bus and the processing circuit 12 needs dormancy, the processing circuit 12 will turn off the second linear voltage regulator 402, an entire system is powered off, and only the low-power circuit part is reserved.

In the present embodiment, a dormancy wake-up circuit is set. When the circuit needs to wake up and enters the normal working state, it sends a signal through the bus module to control the conduction of the second linear voltage regulator, and then the processing circuit is activated, which can reduce power consumption of the circuit in the dormancy state.

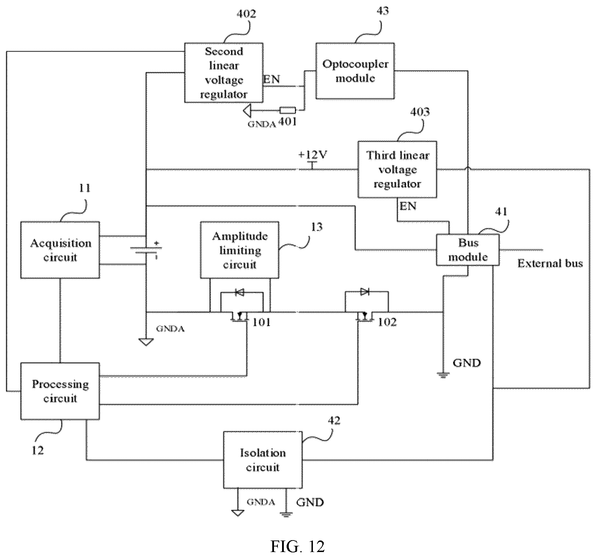

Exemplarily, FIG. 12 is a schematic structural diagram of another battery management circuit provided in Embodiment 4. As shown in FIG. 12, the battery management circuit further includes: a third linear voltage regulator 403;
an input end of the third linear voltage regulator 403 is connected to the positive electrode of the battery, an enabling end of the third linear voltage regulator 403 is connected to the bus module 41, and an output end of the third linear voltage regulator 403 is connected to the bus module 41 and the isolation circuit 42.

Specifically, the third linear voltage regulator 403 is a power source dedicated to supplying power to the bus module 41 and the isolation circuit 42, the activation signal of the third linear voltage regulator 403 comes from the bus module 41, and after the third linear voltage regulator 403 receives the activation signal from the bus module 41, a 5V power supply is output to maintain the normal operation of the bus module 41 and the isolation circuit 42. An anti-reverse diode can also be arranged between the third linear voltage regulator 403 and the +12V bus bar, where a positive electrode of the diode is connected to the bus bar and a negative electrode thereof is connected to the third linear voltage regulator 403.

As an example, the present embodiment can also be implemented in combination with the previous embodiment. When implemented in combination, the 5V power output from the third linear voltage regulator 403 can also be used to activate the optocoupler, and then activate the second linear voltage regulator 402 through the enabling signal sent by the optocoupler.

When a system enters a low power consumption state, only the first linear voltage regulator 301 is turned on. When the system is operating normally, both the first linear voltage regulator 301 and the second linear voltage regulator 402 will be turned on. When the data is communicated over the CAN bus, the third linear voltage regulator 403 will also be turned on.

The present embodiment provides a power supply switching circuit. When the bus module activates the third linear voltage regulator, the output 5V power is used to maintain the normal operation of the bus module and the isolation circuit, and at this time, the bus module no longer received power supply externally, and at the same time, when implemented in combination with other embodiments, the third linear voltage regulator can also supply power to the second linear voltage regulator to realize a dormancy wake-up function.

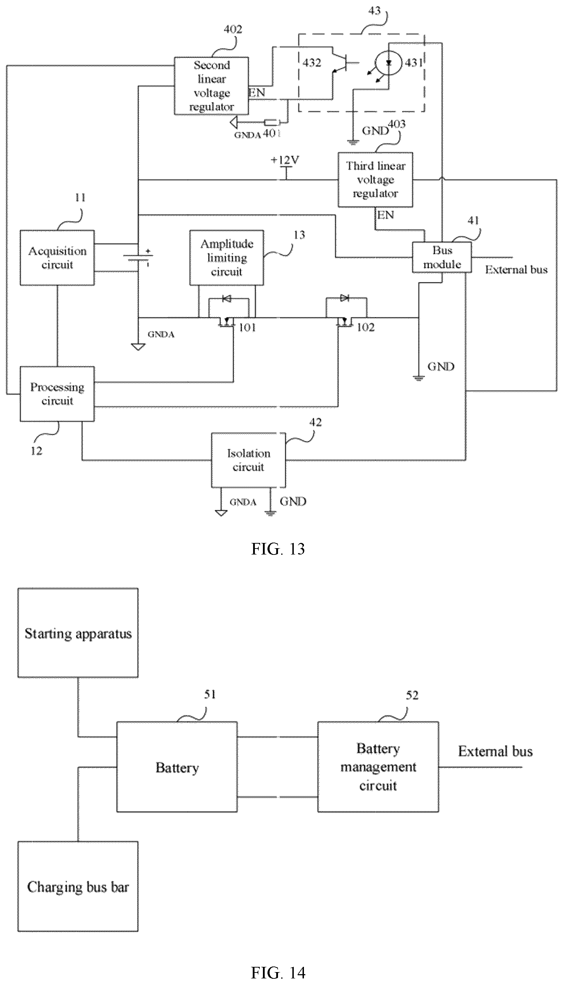

As an example, FIG. 13 is a schematic structural diagram of another battery management circuit provided in Embodiment 4. As shown in FIG. 13, the optocoupler module 43 includes: a light emitting diode 431 and a photosensitive transistor 432;
a positive electrode of the light emitting diode 431 is connected to the bus module 41, and a negative electrode of the light emitting diode 431 is connected to the ground;
the photosensitive transistor 432 is arranged corresponding to the light emitting diode 431, a first end of the photosensitive transistor 432 is connected to the input end of the second linear voltage regulator 402, and a second end of the photosensitive transistor 432 is connected to the enabling end of the second linear voltage regulator 402.

The optocoupler module 43 can be constituted from pairing of the light emitting diode 431 and the photosensitive transistor 432. When the light emitting diode 431 receives a power supply signal, it can wake up the photosensitive transistor 432 and output an enabling signal for the second linear voltage regulator 402, so that the second linear voltage regulator 402 activates an output.

In the optocoupler module provided in the present embodiment, the two parts are respectively connected to the ground and the internal ground to realize electrical isolation. At the same time, when the light emitting diode receives a signal, the photosensitive transistor can output accordingly and activate the second linear voltage regulator.

The present embodiment provides a battery management circuit, which exchanges data with an external bus through the bus module, and realizes electrical isolation inside the circuit, and can realize a wake-up function of components in a dormancy state.

### Embodiment 5

FIG. 14 is a schematic diagram of a battery apparatus provided in Embodiment 5 of the present invention. As shown in FIG. 14, the apparatus includes:
a battery 51 and a battery management circuit 52 as described above; exemplarily, the battery management circuit 52 includes: a circuit, a processing circuit, a first switching element, a second switching element, and an amplitude limiting circuit;
the acquisition circuit is connected to the battery; a positive electrode of the battery is connected to a charging port, a negative electrode of the battery is connected to a first end of the first switching element and the battery pack internal ground, and a second end of the first switching element is connected to a first end of the second switching element, a second end of the second switching element is connected to the ground; a first end of the amplitude limiting circuit is connected to the first end of the first switching element, and a second end of the amplitude limiting circuit is connected to the second end of the first switching element; the processing circuit is connected to the acquisition circuit, a control end of the first switching element, and a control end of the second switching element;
the processing circuit is configured to switch to a normal charging mode or a current limiting charging mode by controlling states of the first switching element and the second switching element according to a battery working environment detected by the acquisition circuit.

The present embodiment is illustrated in combination with a specific application scenario: the battery 51 refers to a starting battery of a vehicle, a 12V lithium-ion battery is generally adopted, and the battery management circuit 52 as shown in the preceding embodiments is required to realize the current limiting charging function. The battery is connected to a charging bus bar through the charging port to enable the charging function, and is connected to a starting apparatus of the vehicle to start an engine of the vehicle. At the same time, the battery 51 is connected to a corresponding battery management circuit to realize a detection of the battery state, and then realize functions such as switching of the battery working state and monitoring of battery safety.

Specifically, for the battery management circuit 52, the switching element can be a MOSFET transistor, and the acquisition circuit is connected to the battery; the first switching element is connected in series with the second switching element; the amplitude limiting circuit is connected in parallel with the first switching element; the processing circuit is connected to the acquisition circuit, the control end of the first switching element and the control end of the second switching element;

The acquisition circuit is used to monitor various parameters of the battery in real time, such as current, voltage, temperature, etc., and the data will be transmitted to the processing circuit. When it is detected that some changes of the parameters will lead to a battery state severely deviating from a normal working condition, the processing circuit controls the states of the first switching element and the second switching element to switch to the current limiting charging mode according to the battery working environment; when it is detected that the parameters return to the normal working environment, the processing circuit controls the states of the first switching element and the second switching element to switch to the normal charging mode. In the normal charging mode, the corresponding charging circuit is: +12V-battery-first switching element-second switching element-GND; in the current limiting charging mode, the corresponding charging circuit is: +12V -battery - amplitude limiting circuit- second switching element - GND. The processing circuit can also adjust the working parameters of the amplitude limiting circuit to realize the adjustment of the charging current on the charging circuit, thereby achieving current limiting charging. In the current limiting charging mode, the amplitude limiting circuit operates, the first switching element is turned off, and the second switching element is turned on; in the normal charging mode, the first switching element is turned on, the second switching element is turned on, and the amplitude limiting circuit does not work.

The present embodiment provides a battery apparatus, including a battery and a battery management circuit, where the battery management circuit further includes: an acquisition circuit, a processing circuit, a first switching element, a second switching element, and an amplitude limiting circuit; the acquisition circuit is connected to the battery; a second end of the first switching element is connected to a first end of the second switching element, and a second end of the second switching element is connected to the ground; a first end of the amplitude limiting circuit is connected to a first end of the first switching element, and a second end of the amplitude limiting circuit is connected to the second end of the first switching element; the processing circuit is connected to the acquisition circuit, a control end of the first switching element and a control end of the second switching element; the processing circuit is configured to switch to a normal charging mode or a current limiting charging mode by controlling states of the first switching element and the second switching element, according to a battery working environment detected by the acquisition circuit. The circuit parameters are collected through the acquisition circuit, the charging mode is switched through the processing circuit, and the current limiting is completed through the amplitude limiting circuit, which can realize automatic current limiting charging of the battery under specific working conditions.

Other embodiments of the present invention will be readily apparent to those skilled in the art from consideration of the specification and practice of the invention disclosed herein. The present specification is intended to cover any modification, use or adaptation of the invention as long as they stay within the scope of the invention as indicated by the following claims.

It should be understood that the present invention is not limited to the precise constructions which have been described above and shown in the accompanying drawings, and various modifications and changes may be made without departing from the scope thereof as limited only by the appended claims.

## Claims

1. A battery management circuit, comprising: an acquisition circuit (11), a processing circuit (12), a first switching element (101), a second switching element (102), and an amplitude limiting circuit (13);
wherein the acquisition circuit (11) is connected in parallel with a battery; a positive electrode of the battery is connected to a charging port, a negative electrode of the battery is connected to a first end of the first switching element (101) and a battery pack internal ground, and a second end of the first switching element (101) is connected to a first end of the second switching element (102), a second end of the second switching element is connected to ground; a first end of the amplitude limiting circuit (13) is connected to the first end of the first switching element (101), and a second end of the amplitude limiting circuit (13) is connected to the second end of the first switching element (101); the processing circuit (12) is connected to the acquisition circuit (11), a control end of the first switching element (101), and a control end of the second switching element (102);
the processing circuit (12) is configured to switch to a normal charging mode or a current limiting charging mode by controlling states of the first switching element (101) and the second switching element (102) according to a battery working environment detected by the acquisition circuit (11);
wherein the amplitude limiting circuit (13) comprises: a third switching element (201), a first diode (202), an inductance element (203), and a first sampling impedance element (204);
wherein a first end of the first sampling impedance element (204) is connected to the processing circuit (12) and a first end of the inductance element (203), and a second end of the first sampling impedance element (204) is connected to the first end of the first switching element (101); and
wherein a second end of the inductance element (203) is connected to a positive electrode of the first diode (202) and a first end of the third switching element (201); a negative electrode of the first diode (202) is connected to the positive electrode of the battery; a control end of the third switching element is connected to the processing circuit (12), and a second end of the third switching element (201) is connected to the second end of the first switching element (101).

2. The battery management circuit according to claim 1, wherein the amplitude limiting circuit (13) further comprises: a first capacitor (205) and a second capacitor (206);
a first end of the first capacitor (205) is connected to the positive electrode of the battery, and a second end of the first capacitor (205) is connected to the first end of the inductance element (203);
a first end of the second capacitor (206) is connected to the positive electrode of the battery, and a second end of the second capacitor (206) is connected to the second end of the third switching element (201).

3. The battery management circuit according to claim 1, wherein the amplitude limiting circuit (13) further comprises: a first operational amplifier unit arranged between the first sampling impedance element (204) and the processing circuit (12), and a second operational amplifier unit (208) between the processing circuit (12) and the third switching element (201);
an input end of the first operational amplifier unit is connected to the first end of the first sampling impedance element (204), and an output end of the first operational amplifier unit is connected to the processing circuit (12);
an input end of the second operational amplifier unit (208) is connected to the processing circuit (12), and an output end of the second operational amplifier unit (208) is connected to a control end of the third switching element (201).

4. The battery management circuit according to claim 1, further comprising: a low power consumption maintaining module (31) and a first linear voltage regulator (301);
wherein an input end of the first linear voltage regulator (301) is connected to the positive electrode of the battery, and an output end of the first linear voltage regulator (301) is connected to the low power consumption maintaining module (31);
the low power consumption maintaining module (31) is arranged between the processing circuit (12) and control ends of the first switching element (101) and the second switching element (102); an input end of the low power consumption maintaining module (31) is connected to the processing circuit (12), an output end of the low power consumption maintaining module (31) is respectively connected to the control end of the first switching element (101) and the control end of the second switching element (102).

5. The battery management circuit according to claim 4, further comprising: a second sampling impedance element (302) arranged between the negative electrode of the battery and the first switching element (101);
wherein a first end of the second sampling impedance element (302) is connected to the negative electrode of the battery and the low power consumption maintaining module (31), and a second end of the second sampling impedance element (302) is connected to the first end of the first switching element (101), the battery pack internal ground and the low power consumption maintaining module (31).

6. The battery management circuit according to claim 5, wherein the first end and the second end of the second sampling impedance element (302) are further connected to the acquisition circuit (11).

7. The battery management circuit according to claim 5, wherein the low power consumption maintaining module (31) comprises: a first trigger (311), a second trigger (312) and a first operational amplifier unit;
an input end of the first trigger (311) is connected to the processing circuit (12), an output end of the first trigger (311) is connected to the control end of the first switching element (101); an input end of the second trigger (312) is connected to the processing circuit (12), an output end of the second trigger (312) is connected to the control end of the second switching element (102);
an input end of the first operational amplifier unit is respectively connected to the first end and the second end of the second sampling impedance element (302), and an output end of the first operational amplifier unit is connected to the second trigger (312).

8. The battery management circuit according to any one of claims 1 to 7, wherein the positive electrode of the battery is connected to a bus module (41), and a ground end of the bus module (41) is connected to the ground.

9. The battery management circuit according to claim 8, further comprising: a first impedance element (401), an optocoupler module (43), and a second linear voltage regulator (402);
wherein an input end of the optocoupler module (43) is connected to the bus module (41), and an output end of the optocoupler module (43) is connected to an enabling end of the second linear voltage regulator (402) and a first end of the first impedance element (401); a second end of the first impedance element (401) is connected to the battery pack internal ground;
an input end of the second linear voltage regulator (402) is connected to the positive electrode of the battery, and an output end of the second linear voltage regulator (402) is connected to the processing circuit (12).

10. The battery management circuit according to claim 9, wherein the optocoupler module (43) comprises: a light emitting diode (431) and a photosensitive transistor (432);
a positive electrode of the light emitting diode (431) is connected to the bus module (41), and a negative electrode of the light emitting diode (431) is connected to the ground;
the photosensitive transistor (432) is arranged corresponding to the light emitting diode (431), a first end of the photosensitive transistor (432) is connected to the input end of the second linear voltage regulator (402), and a second end of the photosensitive transistor (432) is connected to the enabling end of the second linear voltage regulator (402).

11. The battery management circuit according to claim 8, further comprising: an isolation circuit (42);
wherein the isolation circuit (42) is arranged between the bus module (41) and the processing circuit (12), and is respectively connected to the bus module (41) and the processing circuit (12).

12. The battery management circuit according to claim 11, further comprising: a third linear voltage regulator (403);
wherein an input end of the third linear voltage regulator (403) is connected to the positive electrode of the battery, an enabling end of the third linear voltage regulator (403) is connected to the bus module (41), and an output end of the third linear voltage regulator (403) is connected to the bus module (41) and the isolation circuit (42).

13. A battery apparatus, comprising: a battery and the battery management circuit according to any one of claims 1 to 12;
wherein the battery management circuit comprises: an acquisition circuit (11), a processing circuit (12), a first switching element (101), a second switching element (102), and an amplitude limiting circuit (13);
the acquisition circuit (11) is connected to the battery; a positive electrode of the battery is connected to a charging port, a negative electrode of the battery is connected to a first end of the first switching element (101) and the battery pack internal ground, and a second end of the first switching element (101) is connected to a first end of the second switching element (102), a second end of the second switching element (102) is connected to the ground; a first end of the amplitude limiting circuit (13) is connected to the first end of the first switching element (101), and a second end of the amplitude limiting circuit (13) is connected to the second end of the first switching element (101); the processing circuit (12) is connected to the acquisition circuit (11), a control end of the first switching element (101) and a control end of the second switching element (102);
the processing circuit (12) is configured to switch to a normal charging mode or a current limiting charging mode by controlling states of the first switching element (101) and the second switching element (102) according to a battery working environment detected by the acquisition circuit (11).

## Patentansprüche

1. Batterieverwaltungsschaltung, umfassend: eine Erfassungsschaltung (11), eine Verarbeitungsschaltung (12), ein erstes Schaltelement (101), ein zweites Schaltelement (102) und eine Amplitudenbeschränkungsschaltung (13);
wobei die Erfassungsschaltung (11) parallel mit einer Batterie verbunden ist; eine positive Elektrode der Batterie mit einem Ladeport verbunden ist, eine negative Elektrode der Batterie mit einem ersten Ende des ersten Schaltelements (101) und einer internen Batteriepackerdung verbunden ist und ein zweites Ende des ersten Schaltelements (101) mit einem ersten Ende des zweiten Schaltelements (102) verbunden ist, ein zweites Ende des zweiten Schaltelements mit der Erdung verbunden ist; ein erstes Ende der Amplitudenbeschränkungsschaltung (13) mit dem ersten Ende des ersten Schaltelements (101) verbunden ist und ein zweites Ende der Amplitudenbeschränkungsschaltung (13) mit dem zweiten Ende des ersten Schaltelements (101) verbunden ist; die Verarbeitungsschaltung (12) mit der Erfassungsschaltung (11), einem Steuerende des ersten Schaltelements (101) und einem Steuerende des zweiten Schaltelements (102) verbunden ist;
die Verarbeitungsschaltung (12) zum Schalten in einen normalen Lademodus oder einen Strombeschränkungs-Lademodus durch Steuerstatus des ersten Schaltelements (101) und des zweiten Schaltelements (102) gemäß einer Batterie-Arbeitsumgebung ausgestaltet ist, die von der Erfassungsschaltung (11) detektiert ist;
wobei die Amplitudenbeschränkungsschaltung (13) umfasst: ein drittes Schaltelement (201), eine erste Diode (202), ein Induktanzelement (203) und ein erstes Stichprobenentnahme-Impedanzelement (204);
wobei ein erstes Ende des ersten Stichprobenentnahme-Impedanzelements (204) mit der Verarbeitungsschaltung (12) und einem ersten Ende des Induktanzelements (203) verbunden ist und ein zweites Ende des ersten Stichprobenentnahme-Impedanzelements (204) mit dem ersten Ende des ersten Schaltelements (101) verbunden ist; und
wobei ein zweites Ende des Induktanzelements (203) mit einer positiven Elektrode der ersten Diode (202) und einem ersten Ende des dritten Schaltelements (201) verbunden ist; eine negative Elektrode der ersten Diode (202) mit der positiven Elektrode der Batterie verbunden ist; ein Steuerende des dritten Schaltelements mit der Verarbeitungsschaltung (12) verbunden ist und ein zweites Ende des dritten Schaltelements (201) mit dem zweiten Ende des ersten Schaltelements (101) verbunden ist.

2. Batterieverwaltungsschaltung nach Anspruch 1, wobei die Amplitudenbeschränkungsschaltung (13) weiterhin umfasst: einen ersten Kondensator (205) und einen zweiten Kondensator (206);
ein erstes Ende des ersten Kondensators (205) ist mit der positiven Elektrode der Batterie verbunden und ein zweites Ende des ersten Kondensators (205) ist mit dem ersten Ende des Induktanzelements (203) verbunden;
ein erstes Ende des zweiten Kondensators (206) ist mit der positiven Elektrode der Batterie verbunden und ein zweites Ende des zweiten Kondensators (206) ist mit dem zweiten Ende des dritten Schaltelements (201) verbunden.

3. Batterieverwaltungsschaltung nach Anspruch 1, wobei die Amplitudenbeschränkungsschaltung (13) weiterhin umfasst: eine erste betriebsfähige Verstärkereinheit, die zwischen dem ersten Stichprobenentnahme-Impedanzelement (204) und der Verarbeitungsschaltung (12) angeordnet ist, und eine zweite betriebsfähige Verstärkereinheit (208) zwischen der Verarbeitungseinheit (12) und dem dritten Schaltelement (201);
ein Eingabeende der ersten betriebsfähigen Verstärkereinheit ist mit dem ersten Ende des ersten Stichprobenentnahme-Impedanzelements (204) verbunden und ein Ausgabeende der ersten betriebsfähigen Verstärkereinheit ist mit der Verarbeitungsschaltung (12) verbunden;
ein Eingabeende der zweiten betriebsfähigen Verstärkereinheit (208) ist mit der Verarbeitungsschaltung (12) verbunden und ein Ausgabeende der zweiten betriebsfähigen Verstärkereinheit (208) ist mit einem Steuerende des dritten Schaltelements (201) verbunden.

4. Batterieverwaltungsschaltung nach Anspruch 1, weiterhin umfassend: ein Modul zum Aufrechterhalten eines niedrigen Leistungsverbrauchs (31) und einen ersten linearen Spannungsregler (301);
wobei ein Eingabeende des ersten linearen Spannungsreglers (301) mit der positiven Elektrode der Batterie verbunden ist und ein Ausgabeende des ersten linearen Spannungsreglers (301) mit dem Modul zum Aufrechterhalten eines niedrigen Leistungsverbrauchs (31) verbunden ist;
das Modul zum Aufrechterhalten eines niedrigen Leistungsverbrauchs (31) zwischen der Verarbeitungsschaltung (12) und Steuerenden des ersten Schaltelements (101) und des zweiten Schaltelements (102) angeordnet ist; ein Eingabeende des Moduls zum Aufrechterhalten eines niedrigen Leistungsverbrauchs (31) mit der Verarbeitungsschaltung (12) verbunden ist, ein Ausgabeende des Moduls zum Aufrechterhalten eines niedrigen Leistungsverbrauchs (31) jeweils mit dem Steuerende des ersten Schaltelements (101) und dem Steuerende des zweiten Schaltelements (102) verbunden ist.

5. Batterieverwaltungsschaltung nach Anspruch 4, weiterhin umfassend: ein zweites Stichprobenentnahme-Impedanzelement (302), das zwischen der negativen Elektrode der Batterie und dem ersten Schaltelement (101) angeordnet ist;
wobei ein erstes Ende des zweiten Stichprobenentnahme-Impedanzelements (302) mit der negativen Elektrode der Batterie und dem Modul zum Aufrechterhalten eines niedrigen Leistungsverbrauchs (31) verbunden ist und ein zweites Ende des zweiten Stichprobenentnahme-Impedanzelements (302) mit dem ersten Ende des ersten Schaltelements (101), der internen Batteriepackerdung und dem Modul zum Aufrechterhalten eines niedrigen Leistungsverbrauchs (31) verbunden ist.

6. Batterieverwaltungsschaltung nach Anspruch 5, wobei das erste Ende und das zweite Ende des zweiten Stichprobenentnahme-Impedanzelements (302) weiterhin mit der Erfassungsschaltung (11) verbunden sind.

7. Batterieverwaltungsschaltung nach Anspruch 5, wobei das Modul zum Aufrechterhalten eines niedrigen Leistungsverbrauchs (31) umfasst: einen ersten Auslöser (311), einen zweiten Auslöser (312) und eine erste betriebsfähige Verstärkereinheit;
ein Eingabeende des ersten Auslösers (311) ist mit der Verarbeitungsschaltung (12) verbunden, ein Ausgabeende des ersten Auslösers (311) ist mit dem Steuerende des ersten Schaltelements (101) verbunden; ein Eingabeende des zweiten Auslösers (312) ist mit der Verarbeitungsschaltung (12) verbunden, ein Ausgabeende des zweiten Auslösers (312) ist mit dem Steuerende des zweiten Schaltelements (102) verbunden;
ein Eingabeende der ersten Verstärkereinheit ist jeweils mit dem ersten Ende und dem zweiten Ende des zweiten Stichprobenentnahme-Impedanzelements (302) verbunden und ein Ausgabeende der ersten betriebsfähigen Verstärkereinheit ist mit dem zweiten Auslöser (312) verbunden.

8. Batterieverwaltungsschaltung nach irgendeinem der Ansprüche 1 bis 7, wobei die positive Elektrode der Batterie mit einem Busmodul (41) verbunden ist und ein Erdungsende des Busmoduls (41) mit der Erdung verbunden ist.

9. Batterieverwaltungsschaltung nach Anspruch 8, weiterhin umfassend: ein erstes Impedanzelement (401), ein Optokoppler-Modul (43) und einen zweiten linearen Spannungsregler (402);
wobei ein Eingabeende des Optokoppler-Moduls (43) mit dem Busmodul (41) verbunden ist und ein Ausgabeende des Optokopplermoduls (43) mit einem Zustimmungsende des zweiten linearen Spannungsreglers (402) und einem ersten Ende des ersten Impedanzelements (401) verbunden ist; ein zweites Ende des ersten Impedanzelements (401) mit der internen Batteriepackerdung verbunden ist;
ein Eingabeende des zweiten linearen Spannungsreglers (402) mit der positiven Elektrode der Batterie verbunden ist und ein Ausgabeende des zweiten linearen Spannungsreglers (402) mit der Verarbeitungsschaltung (12) verbunden ist.

10. Batterieverwaltungsschaltung nach Anspruch 9, wobei das Optokoppler-Modul (43) umfasst: eine lichtemittierende Diode (431) und einen lichtempfindlichen Transistor (432);
eine positive Elektrode der lichtemittierenden Diode (431) ist mit dem Busmodul (41) verbunden und eine negative Elektrode der lichtemittierenden Diode (431) ist mit der Erdung verbunden,
der lichtempfindliche Transistor (432) ist entsprechend der lichtemittierenden Diode (431) angeordnet, ein erstes Ende des lichtempfindlichen Transistors (432) ist mit dem Eingabeende des zweiten linearen Spannungsreglers (402) verbunden und ein zweites Ende des lichtempfindlichen Transistors (432) ist mit dem Zustimmungsende des zweiten linearen Spannungsreglers (402) verbunden.

11. Batterieverwaltungsschaltung nach Anspruch 8, weiterhin umfassend: eine Isolationsschaltung (42);
wobei die Isolationsschaltung (42) zwischen dem Busmodul (41) und der Verarbeitungsschaltung (12) angeordnet ist und jeweils mit dem Busmodul (41) und der Verarbeitungsschaltung (12) verbunden ist.

12. Batterieverwaltungsschaltung nach Anspruch 11, weiterhin umfassend: einen dritten linearen Spannungsregler (403);
wobei ein Eingabeende des dritten linearen Spannungsreglers (403) mit der positiven Elektrode der Batterie verbunden ist, ein Zustimmungsende des dritten linearen Spannungsreglers (403) mit dem Busmodul (41) verbunden ist und ein Ausgabeende des dritten linearen Spannungsreglers (403) mit dem Busmodul (41) und der Isolationsschaltung (42) verbunden ist.

13. Batterievorrichtung, umfassend: eine Batterie und eine Batterieverwaltungsschaltung nach irgendeinem der Ansprüche 1 bis 12;
wobei die Batterieverwaltungsschaltung umfasst: eine Erfassungsschaltung (11), eine Verarbeitungsschaltung (12), ein erstes Schaltelement (101), ein zweites Schaltelement (102) und eine Amplitudenbeschränkungsschaltung (13);
die Erfassungsschaltung (11) mit der Batterie verbunden ist; eine positive Elektrode der Batterie mit einem Ladeport verbunden ist, eine negative Elektrode der Batterie mit einem ersten Ende des ersten Schaltelements (101) und der internen Batteriepackerdung verbunden ist und ein zweites Ende des ersten Schaltelements (101) mit einem ersten Ende des zweiten Schaltelements (102) verbunden ist, ein zweites Ende des zweiten Schaltelements (102) mit der Erdung verbunden ist; ein erstes Ende der Amplitudenbeschränkungsschaltung (13) mit dem ersten Ende des ersten Schaltelements (101) verbunden ist und ein zweites Ende der Amplitudenbeschränkungsschaltung (13) mit dem zweiten Ende des ersten Schaltelements (101) verbunden ist; die Verarbeitungsschaltung (12) mit der Erfassungsschaltung (11), einem Steuerende des ersten Schaltelements (101) und einem Steuerende des zweiten Schaltelements (102) verbunden ist;
die Verarbeitungsschaltung (12) zum Schalten in einen normalen Lademodus oder einen Strombegrenzungs-Lademodus durch Steuern der Status des ersten Schaltelements (101) und des zweiten Schaltelements (102) nach einer Batteriearbeitsumgebung ausgestaltet ist, die von der Erfassungsschaltung (11) detektiert ist.

## Revendications

1. Circuit de gestion de batterie, comprenant : un circuit d'acquisition (11), un circuit de traitement (12), un premier élément de commutation (101), un deuxième élément de commutation (102) et un circuit de limitation d'amplitude (13) ;
dans lequel le circuit d'acquisition (11) est connecté en parallèle avec une batterie ; une électrode positive de la batterie est connectée à un port de charge, une électrode négative de la batterie est connectée à une première extrémité du premier élément de commutation (101) et à une masse interne du bloc-batterie, et une deuxième extrémité du premier élément de commutation (101) est connectée à une première extrémité du deuxième élément de commutation (102), une deuxième extrémité du deuxième élément de commutation est connectée à la masse ; une première extrémité du circuit de limitation d'amplitude (13) est connectée à la première extrémité du premier élément de commutation (101), et une deuxième extrémité du circuit de limitation d'amplitude (13) est connectée à la deuxième extrémité du premier élément de commutation (101) ; le circuit de traitement (12) est connecté au circuit d'acquisition (11), à une extrémité de contrôle du premier élément de commutation (101) et à une extrémité de contrôle du deuxième élément de commutation (102) ;
le circuit de traitement (12) est configuré pour commuter à un mode de charge normal ou à un mode de charge à limitation de courant en contrôlant les états du premier élément de commutation (101) et du deuxième élément de commutation (102) en fonction de l'environnement de fonctionnement de la batterie détecté par le circuit d'acquisition (11) ;
dans lequel le circuit de limitation d'amplitude (13) comprend : un troisième élément de commutation (201), une première diode (202), un élément d'inductance (203) et un premier élément d'impédance d'échantillonnage (204) ;
dans lequel une première extrémité du premier élément d'impédance d'échantillonnage (204) est connectée au circuit de traitement (12) et à une première extrémité de l'élément d'inductance (203), et une deuxième extrémité du premier élément d'impédance d'échantillonnage (204) est connectée à la première extrémité du premier élément de commutation (101) ; et
dans lequel une deuxième extrémité de l'élément d'inductance (203) est connectée à une électrode positive de la première diode (202) et à une première extrémité du troisième élément de commutation (201) ; une électrode négative de la première diode (202) est connectée à l'électrode positive de la batterie ; une extrémité de contrôle du troisième élément de commutation est connectée au circuit de traitement (12), et une deuxième extrémité du troisième élément de commutation (201) est connectée à la deuxième extrémité du premier élément de commutation (101).

2. Circuit de gestion de batterie selon la revendication 1, dans lequel le circuit de limitation d'amplitude (13) comprend en outre : un premier condensateur (205) et un deuxième condensateur (206) ;
une première extrémité du premier condensateur (205) est connectée à l'électrode positive de la batterie, et une deuxième extrémité du premier condensateur (205) est connectée à la première extrémité de l'élément d'inductance (203) ;
une première extrémité du deuxième condensateur (206) est connectée à l'électrode positive de la batterie, et une deuxième extrémité du deuxième condensateur (206) est connectée à la deuxième extrémité du troisième élément de commutation (201).

3. Circuit de gestion de batterie selon la revendication 1, dans lequel le circuit de limitation d'amplitude (13) comprend en outre : une première unité d'amplificateur opérationnel agencée entre le premier élément d'impédance d'échantillonnage (204) et le circuit de traitement (12), et une deuxième unité d'amplificateur opérationnel (208) entre le circuit de traitement (12) et le troisième élément de commutation (201) ;
une extrémité d'entrée de la première unité d'amplificateur opérationnel est connectée à la première extrémité du premier élément d'impédance d'échantillonnage (204), et une extrémité de sortie de la première unité d'amplificateur opérationnel est connectée au circuit de traitement (12) ;
une extrémité d'entrée de la deuxième unité d'amplificateur opérationnel (208) est connectée au circuit de traitement (12), et une extrémité de sortie de la deuxième unité d'amplificateur opérationnel (208) est connectée à une extrémité de contrôle du troisième élément de commutation (201).

4. Circuit de gestion de batterie selon la revendication 1, comprenant en outre : un module de maintien de faible consommation d'énergie (31) et un premier régulateur de tension linéaire (301) ;
dans lequel une extrémité d'entrée du premier régulateur de tension linéaire (301) est connectée à l'électrode positive de la batterie, et une extrémité de sortie du premier régulateur de tension linéaire (301) est connectée au module de maintien de faible consommation d'énergie (31) ;
le module de maintien de faible consommation d'énergie (31) est agencé entre le circuit de traitement (12) et les extrémités de contrôle du premier élément de commutation (101) et du deuxième élément de commutation (102) ; une extrémité d'entrée du module de maintien de faible consommation d'énergie (31) est connectée au circuit de traitement (12), une extrémité de sortie du module de maintien de faible consommation d'énergie (31) est respectivement connectée à l'extrémité de contrôle du premier élément de commutation (101) et à l'extrémité de contrôle du deuxième élément de commutation (102).

5. Circuit de gestion de batterie selon la revendication 4, comprenant en outre : un deuxième élément d'impédance d'échantillonnage (302) agencé entre l'électrode négative de la batterie et le premier élément de commutation (101) ;
dans lequel une première extrémité du deuxième élément d'impédance d'échantillonnage (302) est connectée à l'électrode négative de la batterie et au module de maintien de faible consommation d'énergie (31), et une deuxième extrémité du deuxième élément d'impédance d'échantillonnage (302) est connectée à la première extrémité du premier élément de commutation (101), à la masse interne du bloc-batterie et au module de maintien de faible consommation d'énergie (31).

6. Circuit de gestion de batterie selon la revendication 5, dans lequel la première extrémité et la deuxième extrémité du deuxième élément d'impédance d'échantillonnage (302) sont en outre connectées au circuit d'acquisition (11).

7. Circuit de gestion de batterie selon la revendication 5, dans lequel le module de maintien de faible consommation d'énergie (31) comprend : un premier déclencheur (311), un deuxième déclencheur (312) et une première unité d'amplificateur opérationnel ;
une extrémité d'entrée du premier déclencheur (311) est connectée au circuit de traitement (12), une extrémité de sortie du premier déclencheur (311) est connectée à l'extrémité de contrôle du premier élément de commutation (101) ; une extrémité d'entrée du deuxième déclencheur (312) est connectée au circuit de traitement (12), une extrémité de sortie du deuxième déclencheur (312) est connectée à l'extrémité de contrôle du deuxième élément de commutation (102) ;
une extrémité d'entrée de la première unité d'amplificateur opérationnel est respectivement connectée à la première extrémité et à la deuxième extrémité du deuxième élément d'impédance d'échantillonnage (302), et une extrémité de sortie de la première unité d'amplificateur opérationnel est connectée au deuxième déclencheur (312).

8. Circuit de gestion de batterie selon l'une quelconque des revendications 1 à 7, dans lequel l'électrode positive de la batterie est connectée à un module de bus (41), et une extrémité de masse du module de bus (41) est connectée à la masse.

9. Circuit de gestion de batterie selon la revendication 8, comprenant en outre : un premier élément d'impédance (401), un module optocoupleur (43) et un deuxième régulateur de tension linéaire (402) ;
dans lequel une extrémité d'entrée du module optocoupleur (43) est connectée au module de bus (41), et une extrémité de sortie du module optocoupleur (43) est connectée à une extrémité d'activation du deuxième régulateur de tension linéaire (402) et à une première extrémité du premier élément d'impédance (401) ; une deuxième extrémité du premier élément d'impédance (401) est connectée à la masse interne du bloc-batterie ;
une extrémité d'entrée du deuxième régulateur de tension linéaire (402) est connectée à l'électrode positive de la batterie, et une extrémité de sortie du deuxième régulateur de tension linéaire (402) est connectée au circuit de traitement (12).

10. Circuit de gestion de batterie selon la revendication 9, dans lequel le module optocoupleur (43) comprend : une diode électroluminescente (431) et un transistor photosensible (432) ;
une électrode positive de la diode électroluminescente (431) est connectée au module de bus (41), et une électrode négative de la diode électroluminescente (431) est connectée à la masse ;
le transistor photosensible (432) est agencé en correspondance avec la diode électroluminescente (431), une première extrémité du transistor photosensible (432) est connectée à l'extrémité d'entrée du deuxième régulateur de tension linéaire (402), et une deuxième extrémité du transistor photosensible (432) est connectée à l'extrémité d'activation du deuxième régulateur de tension linéaire (402).

11. Circuit de gestion de batterie selon la revendication 8, comprenant en outre : un circuit d'isolation (42) ;
dans lequel le circuit d'isolation (42) est agencé entre le module de bus (41) et le circuit de traitement (12), et est respectivement connecté au module de bus (41) et au circuit de traitement (12).

12. Circuit de gestion de batterie selon la revendication 11, comprenant en outre : un troisième régulateur de tension linéaire (403) ;
dans lequel une extrémité d'entrée du troisième régulateur de tension linéaire (403) est connectée à l'électrode positive de la batterie, une extrémité d'activation du troisième régulateur de tension linéaire (403) est connectée au module de bus (41), et une extrémité de sortie du troisième régulateur de tension linéaire (403) est connectée au module de bus (41) et au circuit d'isolation (42).

13. Appareil à batterie, comprenant : une batterie et le circuit de gestion de batterie selon l'une quelconque des revendications 1 à 12 ;
dans lequel le circuit de gestion de batterie comprend : un circuit d'acquisition (11), un circuit de traitement (12), un premier élément de commutation (101), un deuxième élément de commutation (102) et un circuit de limitation d'amplitude (13) ;
le circuit d'acquisition (11) est connecté à la batterie ; une électrode positive de la batterie est connectée à un port de charge, une électrode négative de la batterie est connectée à une première extrémité du premier élément de commutation (101) et à la masse interne du bloc-batterie, et une deuxième extrémité du premier élément de commutation (101) est connectée à une première extrémité du deuxième élément de commutation (102), une deuxième extrémité du deuxième élément de commutation (102) est connectée à la masse ; une première extrémité du circuit de limitation d'amplitude (13) est connectée à la première extrémité du premier élément de commutation (101), et une deuxième extrémité du circuit de limitation d'amplitude (13) est connectée à la deuxième extrémité du premier élément de commutation (101) ; le circuit de traitement (12) est connecté au circuit d'acquisition (11), à une extrémité de contrôle du premier élément de commutation (101) et à une extrémité de contrôle du deuxième élément de commutation (102) ;
le circuit de traitement (12) est configuré pour commuter à un mode de charge normal ou à un mode de charge à limitation de courant en contrôlant les états du premier élément de commutation (101) et du deuxième élément de commutation (102) en fonction de l'environnement de fonctionnement de la batterie détecté par le circuit d'acquisition (11).
